# EUROPEAN PATENT APPLICATION

(11) **EP 4 745 817 A1**
(43) Date of publication of application: **20.05.2026**
(21) Application number: 24839273.0
(22) Date of filing: 23.04.2024
(51) Int. Cl.: G06F 21/64

(54) **INFORMATION PROCESSING DEVICE, BLOCKCHAIN REGISTRATION METHOD, AND BLOCKCHAIN REGISTRATION PROGRAM**

(30) Priority: 11.07.2023 JP 2023114111
(71) Applicant: DENSO CORPORATION, Kariya-city, Aichi 448-8661 (JP)
(72) Inventor: XU Xin, Kariya-city, Aichi-pref 448-8661 (JP)
(74) Representative: Winter, Brandl - Partnerschaft mbB
(86) International application number: PCT/JP2024/015885
(87) International publication number: WO 2025/013375

(57) **Abstract**

A storage system (10) determines multimedia data from among data for registration in a blockchain based on a preset condition, calculates a hash value of the multimedia data, and stores the multimedia data in a given MM database (22B). The storage system (10) then registers, in the blockchain, the calculated hash value and storage address information indicating a storage location of the multimedia data as multimedia data information.

## Description

### CROSS REFERENCE TO RELATED APPLICATIONS

The present application is based on Japanese Patent Application No. 2023-114111 filed on July 11, 2023, contents of which are incorporated herein by reference.

### TECHNICAL FIELD

The present disclosure relates to an information processing device, a blockchain registration method, and a blockchain registration program.

### BACKGROUND ART

In recent years, systems have been developed where various types of data are transmitted to shared servers and registered in blockchains. The data registered in the blockchain includes, for example, data generated or acquired by the vehicle.

In an example of a system where used car data is registered in a blockchain for data sharing, the used car data is of a number of data format types and a huge data amount. The data format types include, for example, CAN analysis result, image, PDF, text, etc. As the data amount, it is conceivable to register, for example, data of 10,000 vehicles or more per day. In addition, a data update frequency varies for each vehicle or each data type, such as every few seconds, every few years, etc.

In order to share such a large amount and variety of data, it is conceivable to use, together with a blockchain, a separate database to store data with large data sizes. In addition, as described in Patent Literature 1, transactions are processed using an application-specific sidechain with respect to the blockchain.

### PRIOR ART LITERATURE

### PATENT LITERATURE

Patent Literature 1: JP 2021-177267 A

### SUMMARY OF INVENTION

In the system using the blockchain and the database together, robustness of managed data tamper detection decreases. In addition, because of using the blockchain and the database together, a time required to register the data, data processing time or the like increases. Furthermore, storing a large sized data in the database or the sidechain requires a server with high processing performance, which increases system operating costs.

As described, storing a data with a large data size in the blockchain and the database in combination, or registering data in the blockchain using a sidechain leads to an increase in load on the system, including processing performance and cost.

It is an object of the present disclosure to provide an information processing device, a blockchain registration method, and a blockchain registration program that can store data with a large data size in a tamper detectable manner without increasing load on a system.

In order to achieve the above-described object, the present disclosure employs the following technical means. The reference symbols in parentheses described in this section and in claims are merely examples showing a correspondence relationship with specific means described in the embodiments set forth below as one aspect of the present disclosure, and do not limit the technical scope of the present disclosure.

An information processing device according to one aspect of the present disclosure includes: a determination unit that determines multimedia data with a relatively large data size based on a preset condition from among data for registration in a blockchain; a first hash value calculation unit that calculates a hash value of the multimedia data; a storage control unit that stores the multimedia data in a given storage unit; and a registration unit that registers multimedia data information in the blockchain so that the hash value calculated by the first hash value calculation unit and storage location information indicating a storage location of the multimedia data are registered as the multimedia data information.

According to this configuration, the multimedia data information including the hash value of the multimedia data and the storage location information is registered in the blockchain, while the multimedia data itself is stored in the storage unit without being registered in the blockchain. Note that the multimedia data is data with a specific extension or a data size exceeding a given value.

As a result, the multimedia data information with a small data size is registered in the blockchain in place of the multimedia data with a large data size. Because the multimedia data information associated with the multimedia data is registered in the blockchain, a database for managing the multimedia data is unnecessary. Furthermore, because the hash value of the multimedia data is registered in the blockchain, whether the stored multimedia data has been tampered with is verifiable using this hash value.

Therefore, this configuration can store data with a large data size in a tamper detectable manner without increasing load on a system.

The above information processing device may further include: a second hash value calculation unit that calculates a hash value of the multimedia data stored in the storage unit indicated by the storage location information registered in the blockchain; a comparison unit that compares between the hash value registered in the blockchain and the hash value calculated by the second hash value calculation unit; and a data output control unit that outputs the multimedia data stored in the storage unit when a result of comparison by the comparison unit is match of the hash values. According to this configuration, tampering with the multimedia data with a large data size can be easily detected.

In the above information processing device, the registration unit may register data other than the multimedia data in the blockchain together with the multimedia data information. According to this configuration, the multimedia data with a relatively large data size and the data with a relatively small data size can be managed using the same blockchain.

In the above information processing device, the hash value may be calculated based on binary data of the multimedia data. According to this configuration, the hash value of the multimedia data can be easily calculated.

In the information processing device, the multimedia data may be data of a movable object. According to this configuration, the multimedia data transmitted from the movable object such as a vehicle can be stored in a tamper-detectable manner without increasing the load on the system.

A blockchain registration method according to one aspect of the present disclosure includes: a first step where a determination unit determines multimedia data with a relatively large data size based on a preset condition from among data for registration in a blockchain; a second step where a first hash value calculation unit calculates a hash value of the multimedia data; a third step where a storage control unit stores the multimedia data in a given storage unit; and a fourth step where a registration unit registers multimedia data information in the blockchain so that the hash value calculated by the first hash value calculation unit and storage location information indicating a storage location of the multimedia data are registered as the multimedia data information.

A blockchain registration program according to one aspect of the present disclosure causes a computer to function as: a determination unit that determines multimedia data with a relatively large data size based on a preset condition from among data for registration in a blockchain; a first hash value calculation unit that calculates a hash value of the multimedia data; a storage control unit that stores the multimedia data in a given storage unit; and a registration unit that registers multimedia data information in the blockchain so that the hash value calculated by the first hash value calculation unit and storage location information indicating a storage location of the multimedia data are registered as the multimedia data information.

### EFFECTS OF INVENTION

According to the present disclosure, it is possible to store data with a large data size in a tamper detectable manner without increasing load on a system.

### BRIEF DESCRIPTION OF DRAWINGS

The above and other objects, features and advantages of the present disclosure will become more apparent from the following detailed description made with reference to the accompanying drawings.
FIG. 1 is a schematic configuration diagram of a storage system of an embodiment.
FIG. 2 is a flowchart showing a flow of blockchain registration process of the embodiment.
Fig. 3 is a flowchart showing a flow of blockchain search process of the embodiment.

### EMBODIMENTS FOR CARRYING OUT INVENTION

Embodiments of the present disclosure will be described below with reference to the drawings. The embodiments described below show examples when embodying the present disclosure, and the present disclosure is not limited to the specific configurations described below. In embodying the present disclosure, specific configurations according to embodiments may be adopted as appropriate.

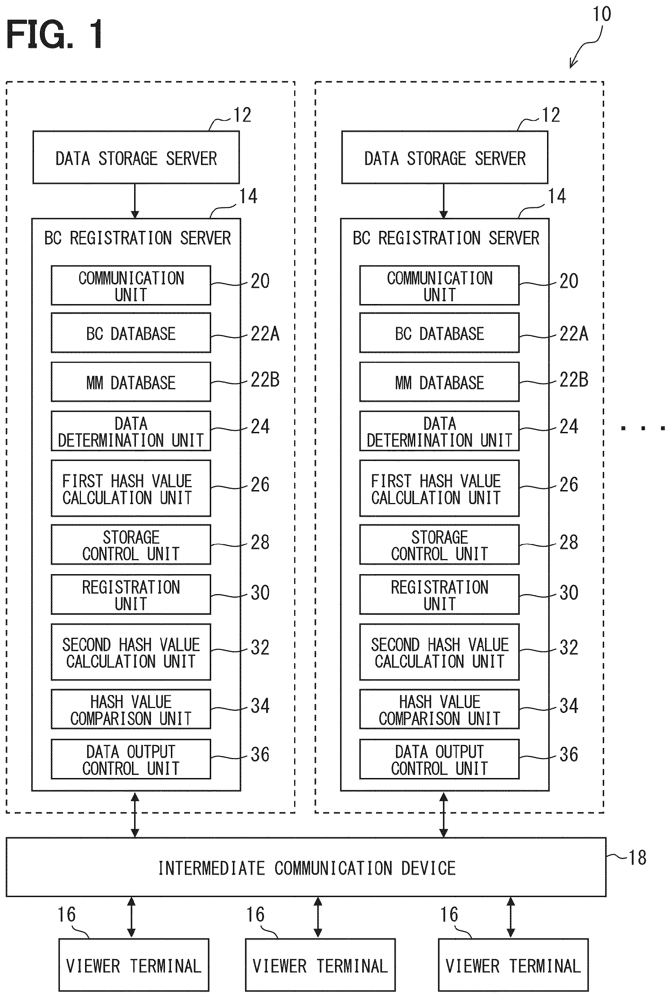

FIG. 1 shows a schematic configuration diagram of a storage system 10. The storage system 10 of the present embodiment includes a data storage server 12, a BC registration server 14, an intermediate communication device 18, and a viewer terminal 16. By way of example, vehicle data transmitted from a movable object represented by a vehicle is retained (stored) and shared in a tamper detectable manner by a blockchain. The vehicle data transmitted from the vehicle in the present embodiment includes multimedia data, as described in detail below. The movable object may be other than vehicle, and may be for example, motorcycles, heavy equipment operated at work sites, or aircraft.

The data storage server 12 and the BC registration server 14 are provided per company, by way of example. For example, the data storage server 12 may be one of facilities of the company and the BC registration server 14 may be a cloud server. FIG. 1 is an example, and the data storage server 12 and the BC registration server 14 in combination may be two or more (e.g., three or more).

The data storage server 12 stores vehicle data collected and accumulated by the company and transmits the vehicle data for registration in the blockchain to the BC registration server 14.

The BC registration server 14 is a node that receives the vehicle data transmitted from the data storage server 12 and stores the vehicle data for each vehicle using a blockchain. The vehicle data transmitted from the data storage server 12 is provided with an identification ID for identifying the vehicle.

The viewer terminal 16 is an information processing device for retrieval and view of the vehicle data registered in the blockchain by the storage system 10 and is owned by a user of the storage system 10. Specifically, using the viewer terminal 16, the user selects a blockchain for a desired vehicle from among blockchains for respective vehicles stored in the storage system 10 and reads the vehicle data of that vehicle.

The intermediate communication device 18 allows the viewer terminal 16 to view the vehicle data without the viewer terminal 16 directly accessing to the BC registration server 14. Specifically, a retrieval condition is input to the intermediate communication device 18 from the viewer terminal 16, and the intermediate communication device 18 reads the vehicle data that matches the retrieval condition from the BC registration server 14 and transmits it to the viewer terminal 16. The viewer terminal 16 may be able to directly access the BC registration server 14 being the node and to view the vehicle data without through the intermediate communication device 18.

Next, a specific configuration of the BC registration server 14 will be described. The BC registration server 14 includes a communication unit 20, a BC database 22A, an MM database 22B, a data determination unit 24, a first hash value calculation unit 26, a storage control unit 28, a registration unit 30, a second hash value calculation unit 32, a hash value comparison unit 34, and a data output control unit 36.

The data determination unit 24, the first hash value calculation unit 26, the storage control unit 28, the registration unit 30, the second hash value calculation unit 32, the hash value comparison unit 34, and the data output control unit 36 are executed by a processing device (CPU) of the BC registration server 14. The processing device implements functions of the above respective units by executing a program stored on a non-transitory tangible storage medium. When the program is executed, a method corresponding to the program is executed.

The communication unit 20 transmits data to and receives data from the data storage server 12, the intermediate communication device 18, and other information processing devices. Specifically, the communication unit 20 receives the vehicle data from the data storage server 12. The communication unit 20 receives a retrieval command from the viewer terminal 16 via the intermediate communication device 18 and transmits a retrieval result to the intermediate communication device 19.

The BC database 22A is a storage device and stores the blockchain for each vehicle.

The MM database 22B is a storage device and stores multimedia data among the vehicle data transmitted from the data storage server 12. The multimedia data here refers to vehicle data with a relatively large data size, i.e., data with a specific extension or data with a data size larger than a given value. Examples of the specific extension include an extension indicating image data such as video or still image, an extension indicating audio, an extension indicating an electronic document such as text, PDF etc., and an extension indicating a CAN analysis result.

The data determination unit 24 determines the multimedia data with a relatively large data size based on a preset condition from among the vehicle data for registration in the blockchain transmitted from the data storage server 12. The above condition is, for example, whether or not a given extension is present and whether or not the data size is greater than or equal to the given data size, as described above.

The first hash value calculation unit 26 calculates a hash value of the multimedia data determined by the data determination unit 24 ("first hash value"). The first hash of the present embodiment is calculated based on binary data of the multimedia data, by way of example.

The storage control unit 28 stores the multimedia data in the MM database 22B. Upon the MM database 22B storing the multimedia data, the storage control unit 28 receives from the MM database 22B storage location information indicating a storage location of the multimedia data (called hereinafter "storage address information").

The registration unit 30 registers the vehicle data received by the BC registration server 14 in the blockchain for each vehicle. The registration unit 30 in the present embodiment registers, in the blockchain, the first hash value calculated by the first hash value calculation unit 26 and the storage address information of the multimedia data as multimedia data information. Specifically, in place of the multimedia data itself, the BC registration server 14 in the present embodiment registers the multimedia data information associated with the multimedia data in the blockchain.

The second hash value calculation unit 32, the hash value comparison unit 34, and the data output control unit 36 function when retrieving the vehicle data registered in the blockchain. The retrieval of the vehicle data is based on the retrieval command from the viewer terminal 16.

The second hash value calculation unit 32 calculates a hash value of the multimedia data stored in the MM database 22B indicated by the storage address information registered in the blockchain (hereinafter referred to as "second hash value"). The second hash value in the present embodiment is calculated based on the binary data of the multimedia data by way of example.

The hash value comparison unit 34 makes comparison between the first hash value registered in the blockchain and the second hash value calculated by the second hash value calculation unit 32.

When a result of the comparison by the hash value comparison unit 34 is match of the hash values, the data output control unit 36 outputs the multimedia data stored in the MM database 22B. The output here is transmission of the vehicle data registered in the blockchain to the viewer terminal 16 via the communication unit 20.

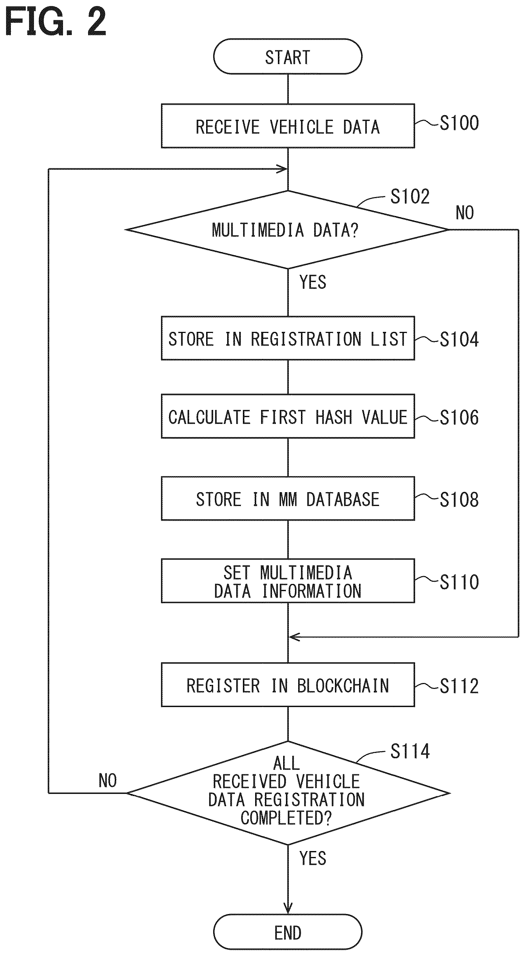

FIG. 2 is a flowchart showing a blockchain registration process for the vehicle data.

In step 100, the vehicle data is received from the vehicle.

In the next step 102, the data determination unit 24 performs a determination of whether or not the received vehicle data is the multimedia data, and if a result of the determination is positive, the process proceeds to step 104, and if a result of the determination is negative, the process proceeds to step 112.

In the case of proceeding from step 102 to step 112, because the vehicle data is not the multimedia data, the registration unit 30 registers the vehicle data itself in the blockchain in step 112. When registering in the blockchain, the hash value for each block is calculated. The hash value for each block is different from the first and second hash values described above.

In step 104, the vehicle data being the multimedia data is stored in a registration list by the data determination unit 24.

In the next step 106, the first hash value of the multimedia data stored in the registration list is calculated by the first hash value calculation unit 26. By way of example, the first hash value calculation unit 26 in the present embodiment calculates, as the first hash value, the hash value of the binary data given by binarizing the multimedia data.

In the next step 108, the storage control unit 28 stores the multimedia data in the MM database 22B. In the present embodiment, the binary data of the multimedia data is stored in the MM database 22B. When storing the multimedia data in the MM database 22B, the storage control unit 28 outputs the above binary data and a registration key to the MM database 22B. Upon storing the binary data, the MM database 22B transmits the storage address information of the binary data to the storage control unit 28. The storage control unit 28 outputs the registration key and the transmitted storage address information to the registration unit 30.

In the next step 110, the registration unit 30 sets the multimedia data information including the first hash value and the storage address information. The multimedia information in the present embodiment includes the registration key and metadata of the multimedia data as well as the first hash value and the storage address information.

In step 112 coming from step 110, the registration unit 30 registers the multimedia data information in the blockchain. When registering the multimedia data information in the blockchain, the hash value for each block including the multimedia data information is calculated. This blockchain is stored in the BC database 22A.

In step 112 coming from step 102, the registration unit 30 registers the vehicle data itself in the blockchain as described above. Specifically, the registration unit 30 of the present embodiment registers data other than multimedia data in the blockchain together with the multimedia data information. Because of this, the storage system 10 can manage the multimedia data with a relatively large data size and data with a relatively small data size in the same blockchain.

In the next step 114, it is determined whether or not the registration of all of the received vehicle data in the blockchain is completed, and if a result of the determination is positive, this blockchain registration process is ended, and if a result of the determination is negative, the process returns to step 102. When the registration of the vehicle data in the blockchain is completed, the registration unit 30 transmits information indicating completion of the registration to the vehicle being a source of the vehicle data.

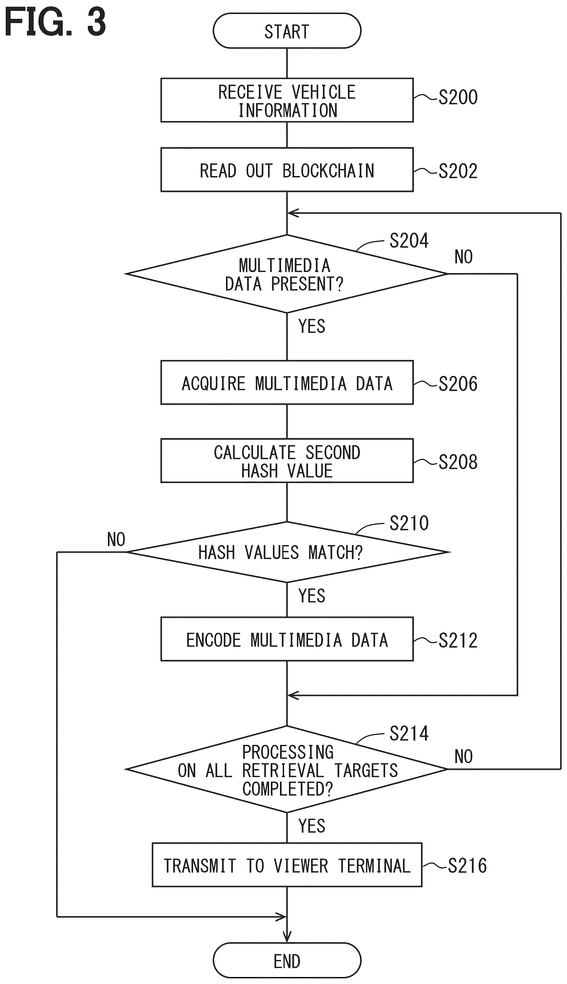

FIG. 3 is a flowchart illustrating a blockchain retrieval process for the vehicle data.

First, in step 200, information (retrieval condition) on a target vehicle for retrieval of the vehicle data and a retrieval time period (time period of vehicle data acquisition) is received from the viewer terminal 16 via the intermediate communication device 18.

In the next step 202, the retrieval target blockchain is read from the BC database 22A.

In the next step 204, the retrieval target blockchain is analyzed to determine whether or not the multimedia data is present in the blockchain, and if a result of the determination is positive, the process proceeds to step 206, and if a result of the determination is negative, the process proceeds to step 214. The presence or absence of the multimedia data is determined by whether or not the multimedia data information is in the block. A case where the process proceeds from step 204 to step 214 is a case where the vehicle data registered in the blockchain is not the multimedia data.

In step 206, the multimedia data (binary data) is acquired from the MM database 22B using the storage address information and the registration key included in the multimedia data information.

In the next step 208, the second hash value calculation unit 32 calculates the hash value (second hash value) of the binary data of the multimedia data acquired in step 206.

In the next step 210, the hash value comparison unit 34 make comparison on whether or not the first hash value included in the multimedia data information and the second hash value calculated in step 206 match each other, and if they match, the process proceeds to step 212.

If the first hash value and the second hash value do not match each other, this blockchain retrieval process is ended as the multimedia data stored in the MM database 22B has been tampered with. In this case, information indicating that the multimedia data has been tampered with is transmitted to the viewer terminal 16, a separate management terminal, etc.

In step 212, the multimedia data given as the binary data is encoded.

In the next step 214, it is determined whether or not all processing on the retrieval target blockchain is completed. If a result of the determination is positive, the process proceeds to step 216. If a result of the determination is negative, the process returns to step 204.

In step 216, the vehicle data including the multimedia data read from the blockchain is transmitted to the viewer terminal 16 via the intermediate communication device 18, and this blockchain search process is ended.

As explained above, in the storage system 10 of the present embodiment, the multimedia data information including the hash value of the multimedia data and the storage address information is registered in the blockchain, while the multimedia data itself is stored in the MM database 22B without being registered in the blockchain.

As a result, the multimedia data information with a small data size is registered in the blockchain in place of the multimedia data with a large data size. Because the multimedia data information associated with the multimedia data is registered in the blockchain, a database for managing the multimedia data is unnecessary. In addition, because the hash value of the multimedia data is registered in the blockchain, it is possible to verify whether or not the stored multimedia data has been tampered with, by using this hash value.

Therefore, the storage system 10 in the present embodiment can store the multimedia data with a large data size in a tamper-detectable manner without increasing the load on the system.

Although the present disclosure has been described with the embodiments, the technical scope of the present disclosure is not limited to the scope described in the above embodiments. Various modifications or improvements can be made to the above embodiments without departing from the spirit and scope of the present disclosure, and the modifications or improvements are also included in the technical scope of the present disclosure.

The above embodiments illustrate, but not limited to, a form where the BC registration server 14 stores the multimedia data in the MM database 22B. The multimedia data may be registered in the blockchain while being stored in the data storage server 12.

The above embodiments illustrate, but not limited to, a form where the multimedia data is stored in MM database 22B as the binary data. The multimedia data may be registered in the blockchain without being binarized. In this form, each time the hash value is calculated, the multimedia data is binarized.

The above embodiments illustrate, but not limited to, a form where the data determination unit 24 automatically determines whether or not the vehicle data for registration in the blockchain is the multimedia data. Whether or not the vehicle data for registration in the blockchain is the multimedia data may be determined by human, such as a data management person or the like.

The above embodiments illustrate, but not limited to, a form where the data for registration in the blockchain is the vehicle data representing data of a movable object. As long as data includes the multimedia data, data of other movable objects or data transmitted from other information processing devices may be registered in the blockchain.

The above embodiments illustrate, but not limited to, a form where the BC registration server 14 or the BC database 22A is provided for each company. Multiple companies may share the BC registration server 14 or the BC database 22A with each other.

The above embodiments illustrate, but not limited to, a form where the BC registration server 14 receives the vehicle data from the data storage server 12. The BC registration server 14 may receive the vehicle data directly from the vehicle.

The control units and the methods thereof described in the present embodiments may be implemented by a dedicated computer provided by configuring a processor programmed to execute one or more functions embodied by a computer program. Alternatively, the devices and the methods thereof described in the present embodiments may be implemented by a dedicated hardware logic circuit. Alternatively, the devices and the methods thereof described in the present embodiments may be implemented by one or more dedicated computers provided by configuring a processor executing a computer program in combination with one or more hardware logic circuits. Furthermore, the computer program may be stored in a computer-readable non-transitory tangible storage medium as instructions executed by a computer.

Further, the flow of process described in the above embodiments is an example, and an unnecessary step may be deleted, a new step may be added, or a processing order may be exchanged without departing from the spirit and scope of the present disclosure.

## Claims

1. An information processing device (110) comprising:
a determination unit (24) that determines multimedia data with a relatively large data size based on a preset condition from among data for registration in a blockchain;
a first hash value calculation unit (26) that calculates a hash value of the multimedia data;
a storage control unit (28) that stores the multimedia data in a given storage unit; and
a registration unit (30) that registers multimedia data information in the blockchain so that the hash value calculated by the first hash value calculation unit and storage location information indicating a storage location of the multimedia data are registered as the multimedia data information.

2. The information processing device according to claim 1, further comprising:
a second hash value calculation unit (32) that calculates a hash value of the multimedia data stored in the storage unit indicated by the storage location information registered in the blockchain;
a comparison unit (34) that compares between the hash value registered in the blockchain and the hash value calculated by the second hash value calculation unit; and
a data output control unit (36) that outputs the multimedia data stored in the storage unit when a result of comparison by the comparison unit is match of the hash values.

3. The information processing device according to claim 1 or 2, wherein
the registration unit registers data other than the multimedia data in the blockchain together with the multimedia data information.

4. The information processing device according to claim 1 or 2, wherein
the hash value is calculated based on binary data of the multimedia data.

5. The information processing device according to claim 1 or 2, wherein
the multimedia data is data of a movable object (12).

6. A blockchain registration method comprising:
a first step where a determination unit determines multimedia data with a relatively large data size based on a preset condition from among data for registration in a blockchain;
a second step where a first hash value calculation unit calculates a hash value of the multimedia data;
a third step where a storage control unit stores the multimedia data in a given storage unit; and
a fourth step where a registration unit registers multimedia data information in the blockchain so that the hash value calculated by the first hash value calculation unit and storage location information indicating a storage location of the multimedia data are registered as the multimedia data information.

7. A blockchain registration program causing a computer to function as:
a determination unit that determines multimedia data with a relatively large data size based on a preset condition from among data for registration in a blockchain;
a first hash value calculation unit that calculates a hash value of the multimedia data;
a storage control unit that stores the multimedia data in a given storage unit; and
a registration unit that registers multimedia data information in the blockchain so that the hash value calculated by the first hash value calculation unit and storage location information indicating a storage location of the multimedia data are registered as the multimedia data information.
